Europäisches Patentamt

European Patent Office

Office européen des brevets

(11) Publication number: 0 215 178
A1

# EUROPEAN PATENT APPLICATION

(21) Application number: 85850285.9

(22) Date of filing: 16.09.85

(51) Int. Cl.⁴: G01N 27/30

(43) Date of publication of application:
25.03.87 Bulletin 87/13

(84) Designated Contracting States:
AT BE CH DE FR GB IT LI LU NL SE

(71) Applicant: VALTION TEKNILLINEN
TUTKIMUSKESKUS
Vuorimiehenkatu 5
SF-02150 Espoo(FI)

(72) Inventor: Selin, Lauri
c/o Metallilaboratorio VTT Metallimiehenkuja
6
SF-02150 Espoo(FI)
Inventor: Aaltonen, Pertti
c/o Metallilaboratorio VTT Metallimiehenkuja
6
SF-02150 Espoo(FI)

(74) Representative: Widén, Björn et al
Uppsala Patentbyra Box 9039
S-750 09 Uppsala(SE)

(54) A reference electrode.

(57) A reference electrode which includes a housing/main tube (1) filled with a solution that conducts electricity and in which the main tube is arranged to be inserted into a pressurized system, a plug (3) manufactured of porous material and connected to the end (2) of the main tube, an intermediary plug manufactured (5) of porous material and placed within the main tube in order to divide the main tube's space into two parts (6, 7), a cooling member (9) placed outside the main tube in the immediate vicinity of the intermediary plug (5) for cooling the tube and a measuring member (4) placed within the main tube in it's other part (7).

Fig. 1

## A REFERENCE ELECTRODE

The object of the invention is a reference electrode which includes: a housing i.e. a main tube which has been filled with a solution that conducts electricity and whose other end has been arranged to enter a pressurized system; a plug attached to the end of the main tube and manufactured of porous material, and a measuring member placed within the main tube.

When the electrochemical measurements are carried out at high tempreatures in pressurized systems, the potential difference between an electrode placed in the system and a special reference electrode is measured. The reference electrode is in communication with the pressurized system and the plug manufactured of porous material makes the conduction of electrical current possible. The solution in the electrode and the measuring member are in equilibrium and the potential of the measuring member and the reference electrode should be constant throughout the whole period of the measurement. The measuring periods are often quite long, even half a year, and therefore the instrument's functioning shoud be reliable. However, in the instruments, known in the state of the art, seepage of the solution in the main tube and change of the solution mentioned above with the solution in the system under pressure takes place, at which the circumstances in the reference electrode change. The solutions are usually analysed in the begining and end of the measurements. Thus, the circumstances during a measurement that has taken several months could have changed so that the measurements won't give reliable results. In addition, the measurements are jeopardized due to the probable passage of the solution from the pressurized system into the measuring space inside the measuring instrument, which causes a change in the composition of the measuring solution. Further the seepage of the reference electrode's measuring solution out into the surroundings from the other end of the electrode is a hindrance for proper measurements, because this also causes a change in the properties of the measuring solution.

An object of the invention is to bring about a reference electrode which obviates the drawbacks of the reference electrodes known in the state of the art. Especially, the aim of the invention is to bring about a reference electrode which can be used for several months without a change in the properties of the instrument. Moreover, another object of the invention is to bring about an electrode which is safe and easy to use.

According to the invention the electrode includes a plug manufactured of porous material placed in the main tube so that it devides the main tube into two parts.

In addition, a measuring member has been arranged to the other part, advantageously to the other end of the main tube in a pressure -tight manner.

On the both sides of the intermediary plug a same solution which conducts electricity has been contained so that the circumstances in the electrode's part, in which the measuring member has been placed, remain accurately constant.

Thus, even if change/leakage of the solution took place through the intermediary plug, it would not effect the equillibrium between the solution and the measuring member. In addition, the measuring solution cannot seep out from the other end of the main tube. Thus, if has been ensured that the measuring results stay reliable also during long measuring periods. The construction according to the invention is reliable in operation and safe for its user.

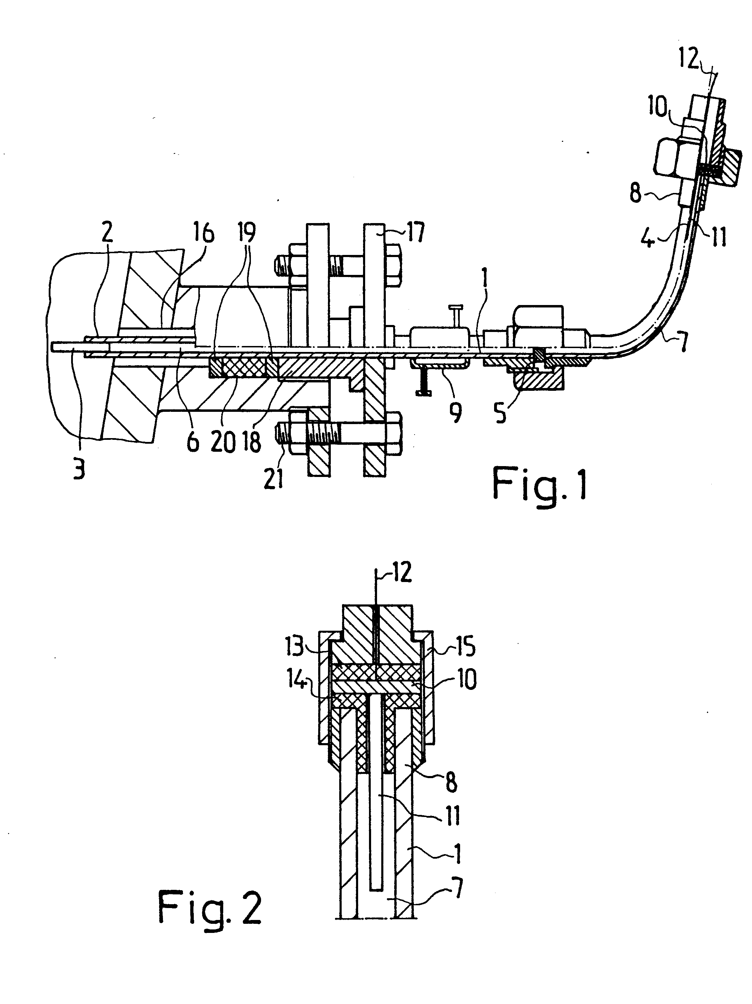

The invention is explained in the following by refering to the accompanying drawings, where fig. 1 shows a sideways partly sectioned view of an application of a reference electrode, according to the invention, attached to a pressurized system, fig. 2 shows a sideways partly sectioned view of an application of the measuring member's attachment to the main tube in accordance with the present invention.

The application of the reference electrode shown in fig. 1 includes a housing i.e. a main tube 1 which inner part has been filled with a solution that conducts electricity. This solution is usually a salt solution. A plug 3 manufactured of porous material has been connected to the outer end of the main tube 1 and to the opposite end 8 of the tube a measuring member 4 has been placed. In addition, an intermediary plug 5 which divides the main tube into two parts 6, 7 has been placed within the main tube. The plug 3 and the intermediary plug 5 have been manufactured of porous material, such as asbestos, zirconia or corresponding material suitable for this purpose.

According to figs 1 and 2 the measuring member 4 includes a flange 10 and a rod 11 connected perpendicularly to one side of the flange and a conductor 12 which is connected to the opposite side of the flange. According to fig. 2 the instrument includes gaskets 13, 14 manufactured of a compressible material. The gaskets have been manufactured of teflon or other material suitable for the purpose. The gasket's 13 form is platy and it has been equiped with an aperture for receiving the conductor 12 and it's intended to be placed on the conductor's side of the measuring member. The shape of the gasket 14 is like the letter T and an aperture has been formed in it for the rod 11. This gasket is intended to be placed between the measuring unit and the mouth of the main tube so that the rod extends from the gasket into part 7 of the main tube. The measuring unit has been connected in a pressure-tight manner on the mouth of the main tube by placing the measuring member and the gaskets upon the end of the main tube and tightening from a clamping member 15, at which the gaskets 13 and 14 are compressed so that the structure is packed.

According to fig. 1 the reference electrode is connected to the aperture 16 made in the wall of the pressurized system so that the end 2 of the main tube protrudes through the wall.

The reference electrode has been connected to a displacement device 17, by which the reference electrode can be easily moved with respect to the wall. As the electrode is in its place the leading-in is packed by a packing bolster 18, metal rings 19 and a gasket 20. The packing bolster squeezes the metal ring and, hence, the sealing material in between the metal rings is partly compressed, which seals the construction, as the nuts 21 are tightened.

A cooling member 9 has been placed in the immediate vicinity of the intermediaty plug 5 and it functions, for example, by running water and cools the main tube and especially part 7 of the main tube so that the tempreature remains constant during the measurement.

In the presented application the measuring member has been manufactured chiefly of silver and the solution is a potassium chloride solution, but naturally other known solution/metal combinations suitable for the instrument can be used.

The invention has been clarified by refering to an advantegeous application, but also other applications are possible within the scope of the inventive step defined by the claims.

## Claims

1. A reference electrode which includes: a housing/main tube (1) filled with a solution that conducts electricity and in which the main tube is arranged to be inserted into a pressurized system; a plug (3) manufactured of porous material and connected to the end (2) of the main tube; a measuring member (4) placed within the main tube; an intermediary plug manufactured (5) of porous material and placed within the main tube in order to divide the main tube's space into two parts (6, 7); wherein the measuring member is arranged within the outer part (7) of the main tube in a pressure-tight manner, **characterized** in that the instrument includes a cooling member (9) placed outside the main tube in the immediate vicinity of the intermediary plug (5) for cooling the tube.

2. An instrument according to claim 1, **characterized** in that the solution is a salt solution, advantageously a potassium chloride (KCl) solution.

3. An instrument according to claim 1 or 2, **characterized** in that the measuring member (4) includes a flange (10) and a rod (11) connected prependicularly to the flange and a conductor (12) connected to the opposite side of the flange.

4. An istrument according to claim 3, **characterized** in that the instrument includes gaskets - (13, 14) manufactured of compressible material and arranged to be placed on both sides of the flange - (10).

5. An instrument according to claim 4, **characterized** in that one of the gaskets (14) has been arranged arround the rod (11).

Fig. 1

Fig. 2

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 282 081 (F.C. ARRANCE) * Column 3, line 41 - column 4, line 66; figure 3 * | 1,2 | G 01 N 27/30 |
| Y | US-A-3 281 348 (E.A. SCHUMACHER et al.) * Column 1, line 58 - column 3, line 23 * | 1,2 | |
| A | US-A-3 103 480 (H. WATANABE et al.) * Column 2, line 55 - column 3, line 53 * | 1,2 | |
| A | US-A-4 128 468 (BUKAMIER) * Column 2, line 28 - column 7, line 43 * | 1,2 | |
| A | US-A-3 505 195 (NIELSEN et al.) * Column 2, line 33 - column 3, line 68 * | 1 | TECHNICAL FIELDS SEARCHED (Int. Cl.4) G 01 N 27/00 |

The present search report has been drawn up for all claims

| Place of search | Date of completion of the search | Examiner |
|---|---|---|
| THE HAGUE | 30-05-1986 | BINDON C.A. |